# EUROPÄISCHE PATENTSCHRIFT

(11) **EP 3 084 943 B1**
(45) Veröffentlichungstag und Bekanntmachung des Hinweises auf die Patenterteilung: **26.05.2021**
(21) Anmeldenummer: 14820821.8
(22) Anmeldetag: 17.12.2014
(51) Int. Cl.: H02M 1/32, H02J 3/38, H02M 1/00, H02M 3/156, H02M 7/5387

(54) **PHOTOVOLTAIK WECHSELRICHTER MIT VORGESCHALTETEM DC/DC WANDLER UND TEMPERATURREGELUNG DER LEISTUNGSHALBLEITER**
PHOTOVOLTAIC INVERTER WITH DC/DC INPUT CONDITIONING CONVERTER AND CONTROL OF THE POWER-SEMICONDUCTOR TEMPERATURES
ONDULEUR PHOTOVOLTAIQUE AVEC CONVERTISSEUR CC/CC D'ENTRÉE ET RÉGULATION DES TEMPERATURES DES SEMI-CONDUCTEURS DE PUISSANCE

(30) Priorität: 18.12.2013 DE 102013114271
(43) Veröffentlichungstag der Anmeldung: 26.10.2016
(73) Patentinhaber: SMA Solar Technology AG, 34266 Niestetal (DE)
(72) Erfinder: UNRU, Alexander, 34225 Baunatal (DE); BOCK, Martin, 35110 Frankenau (DE)
(74) Vertreter: Lahnor, Peter
(86) Internationale Anmeldenummer: PCT/EP2014/078186
(87) Internationale Veröffentlichungsnummer: WO 2015/091625

(56) Entgegenhaltungen:
- EP-A2- 2 061 143
- CN-A- 103 199 724
- US-A1- 2010 133 904

## Beschreibung

### TECHNISCHES GEBIET DER ERFINDUNG

Die Erfindung betrifft ein Verfahren zum Betrieb eines Wechselrichters, insbesondere als Teil einer Energieerzeugungsanlage, sowie einen Wechselrichter zur Durchführung des Verfahrens.

Wechselrichter dienen zur Umwandlung einer von einem Generator, beispielsweise einer von einem Photovoltaik-Generator in Form eines elektrischen Gleichstroms erzeugten elektrischen Leistung in einen Wechselstrom zur Einspeisung in ein Wechselspannungsnetz. Dazu umfasst ein Wechselrichter einen eingangsseitigen Gleichspannungswandler und eine ausgangsseitige Wechselrichterbrücke, um mittels darin verwendeter Leistungshalbleiter eine Eingangsspannung des Wechselrichters derart einzustellen, dass dem Generator die maximal mögliche Leistung entnommen wird, indem er an seinem Punkt maximaler Leistung betrieben wird ("Maximum Power Point", MPP), wobei die Eingangsspannung etwaigen Änderungen des MPP nachgeführt wird (MPP-Tracking, kurz MPPT). Hierbei kommt es durch in den Bauteilen des Wechselrichters anfallende Verluste, insbesondere durch Schaltverluste in den Leistungshalbleitern, durch ohmsche Verluste in sonstigen Bauteilen sowie durch Ummagnetisierungsverluste, welche insbesondere in Drosseln auftreten, innerhalb des Wechselrichters zu einer Erwärmung der Bauteile des Wechselrichters, insbesondere zu einer Erwärmung der Leistungshalbleiter und der Drosseln, wobei die Bauteile als Folge einer übermäßigen Erwärmung beschädigt werden können.

Daher ist es erforderlich, Temperaturen innerhalb des Wechselrichters zu überwachen und bei Überschreiten von diesen Temperaturen zugeordneten Grenzwerten die in den Bauteilen anfallende Verlustleistung zu reduzieren, insbesondere indem die elektrische Leistung des Generators und damit auch die vom Wechselrichter umgewandelte elektrische Leistung reduziert wird.

### STAND DER TECHNIK

Aus der DE 102011007929 A1 ist ein Verfahren zur Abregelung eines Wechselrichters bekannt, bei dem eine erste Messgröße, die repräsentativ für eine Temperatur innerhalb der Wechselrichterbrücke ist, eine zweite Messgröße, die repräsentativ für eine in ein Wechselspannungsnetz eingespeiste elektrische Leistung ist, und weitere Messgrößen erfasst werden, wobei die weiteren Messgrößen eine Spannung an den Generatoranschlüssen des Wechselrichters, d.h. eine Eingangsspannung des Wechselrichters umfassen können. In Abhängigkeit dieser Messgrößen wird ein reduzierter Leistungswert bestimmt, auf den die in das Wechselspannungsnetz eingespeiste elektrische Leistung reduziert wird, insbesondere indem ein von dem Generator erzeugter Gleichstrom auf einen maximalen Generatorstromwert reduziert wird; im Falle eines Photovoltaik-Generators erfolgt diese Reduktion des von dem Generator erzeugten Gleichstroms anhand einer Erhöhung der Eingangsspannung des Wechselrichters.

Aus der EP 0827254 A1 ist ein Verfahren zur Steuerung einer Leistung eines Wechselrichters für einen Photovoltaik-Generator bekannt, bei dem eine Eingangsspannung des Wechselrichters derart geregelt wird, dass dem Photovoltaik-Generator eine maximal mögliche elektrische Leistung entnommen wird, sofern diese unterhalb eines Grenzwertes für die vom Wechselrichter verarbeitete elektrische Leistung liegt. Wenn die maximal mögliche elektrische Leistung des Photovoltaik-Generators den Grenzwert übersteigt, wird die Eingangsspannung des Wechselrichters erhöht und im Folgenden derart geregelt, dass die dem Photovoltaik-Generator entnommene Leistung dem Grenzwert entspricht. Dadurch wird der Wechselrichter vor einer Überhitzung geschützt.

Aus der US 20130077372 A1 ist ein Verfahren zum Betrieb eines Wechselrichters für einen Photovoltaik-Generator mit einem eingangsseitigen Gleichspannungswandler an einem Arbeitspunkt mit reduzierter Leistung bekannt, bei dem der Arbeitspunkt mit reduzierter Leistung dann, wenn die MPP-Leistung des Photovoltaik-Generators eine für den Wechselrichter spezifizierte maximal erlaubte elektrische Leistung übersteigt, eingestellt wird, indem mittels des Gleichspannungswandlers eine Eingangsspannung des Wechselrichters eingestellt wird, die unterhalb oder oberhalb der MPP-Spannung des Photovoltaik-Generators liegt. Dabei wird ein Arbeitspunkt mit einer Eingangsspannung unterhalb der MPP-Spannung gewählt, wenn eine Leerlaufspannung des Photovoltaik-Generators oberhalb einer maximal erlaubten Eingangsspannung des Wechselrichters und ein Kurzschlussstrom des Photovoltaik-Generators unterhalb eines maximal erlaubten eingangsseitigen Gleichstroms liegt; andernfalls wird ein Arbeitspunkt mit einer Eingangsspannung oberhalb der MPP-Spannung gewählt. Mit diesem Verfahren können insbesondere eine Überlastung des Wechselrichters und gleichzeitig ein Abschalten des Wechselrichters aufgrund einer zu hohen Eingangsspannung und/oder aufgrund eines zu hohen Gleichstroms verhindert werden.

Aus der US 20090284998 ist ein Verfahren zum Betrieb eines Wechselrichters bekannt, wobei der Wechselrichter eingangsseitig über einen Gleichspannungswandler an einen elektrischen Generator angeschlossen ist und eine Eingangsspannung des Wechselrichters mittels MPP-Tracking einer MPP-Spannung entspricht, bei welcher der Generator eine maximale elektrische Leistung abgibt, wobei ein Temperaturwert in dem Gleichspannungswandler ermittelt wird und das MPP-Tracking ausgesetzt wird, wenn der Temperaturwert in dem Gleichspannungswandler einen maximal zulässigen Grenzwert überschreitet.

Aus der CN 103199724 A ist ein zweistufiger Wechselrichter bekannt, bei dem ein Sollwert für einen Eingangsgleichstrom mittels einer geschlossenen Regelschleife in Abhängigkeit einer Temperatur eingestellt wird, so dass die gesamte Arbeitstemperatur des Wechselrichters effektiv zur Maximierung der umgesetzten Leistung gesteuert und eine Übertemperatur vermieden wird. Dazu werden Temperaturen an einem Gleichspannungswandler und an einer Wechselrichterbrücke des Wechselrichters erfasst und mit einem Temperaturgrenzwert vergleichen. Bei Überschreiten des Temperaturgrenzwertes wird der Eingangsstrom des Wechselrichters reduziert, wodurch aufgrund der Charakteristik eines an den Wechselrichter angeschlossenen Photovoltaik-Generators die Eingangsspannung erhöht und die Eingangsleistung am Wechselrichter reduziert wird. Durch die Reduktion der Eingangsleistung wird zudem eine Überspannung in einem DC-Bus des Wechselrichters vermieden.

### AUFGABE DER ERFINDUNG

Der Erfindung liegt die Aufgabe zugrunde, einen Wechselrichter durch eine Änderung der Eingangsspannung des Wechselrichters gegenüber der MPP-Spannung vor thermischer Überlastung zu schützen, wobei einerseits die in den Bauteilen des Wechselrichters anfallenden Verluste gerade ausreichend reduziert werden und andererseits die elektrische Leistung eines eingangsseitig angeschlossenen Generators und damit auch die Ausgangsleistung des Wechselrichters nur minimal reduziert werden.

### LÖSUNG

Die Aufgabe wird durch ein Verfahren zum Betrieb eines Wechselrichters mit den Merkmalen des unabhängigen Patentanspruches 1 sowie einen Wechselrichter mit den Merkmalen des Patentanspruches 11 gelöst. Bevorzugte Ausführungsformen sind in den abhängigen Patentansprüchen definiert.

### BESCHREIBUNG DER ERFINDUNG

Bei einem erfindungsgemäßen Verfahren zum Betrieb eines Wechselrichters mit einem eingangsseitigen Gleichspannungswandler, der als Hochsetzsteller ausgeführt ist, und einer ausgangsseitige Wechselrichterbrücke, wird eine Eingangsspannung des Wechselrichters durch den Gleichspannungswandler oder die Wechselrichterbrücke eingestellt. Die Eingangsspannung entspricht im Normalbetrieb des Wechselrichters einer MPP-Spannung, bei der ein eingangsseitig anschließbarer Generator eine maximale elektrische Leistung abgibt wobei der Hochsetzsteller nur dann aktiviert ist, d.h. getaktet betrieben wird, wenn die MPP-Spannung des Generators unterhalb einer minimal nötigen Spannung eines Gleichspannungszwischenkreises des Wechselrichters liegt,. Es werden ein erster Temperaturwert in dem Gleichspannungswandler und ein zweiter Temperaturwert in der Wechselrichterbrücke ermittelt. Die Eingangsspannung des Wechselrichters wird gegenüber der MPP-Spannung geändert, wenn mindestens einer der ermittelten Temperaturwerte einen ihm zugeordneten Grenzwert überschreitet.

In dem erfindungsgemäßen Verfahren wird die Eingangsspannung gegenüber der MPP-Spannung erhöht, wenn ein Überschreiten des Grenzwertes für den ersten Temperaturwert in dem Gleichspannungswandler ermittelt wird und/oder die MPP-Spannung unterhalb einer vorgegebenen Grenzspannung liegt, wobei die Grenzspannung innerhalb eines vom Wechselrichter einstellbaren MPP-Spannungsbereiches liegt und zwischen 80% und 120% einer Minimal-spannung eines Gleich-spannungs-zwischenkreises des Wechselrichters beträgt. Andernfalls wird die Eingangsspannung gegenüber der MPP-Spannung reduziert.

Die Erfindung beruht auf der Erkenntnis, dass es im Falle einer Übertemperatur im Wechselrichter zur optimalen Reduktion der in den einzelnen Bauteilen des Wechselrichters anfallenden Verlustleistung bei gleichzeitiger Maximierung der erzeugten und eingespeisten elektrischen Leistung nicht ausreicht, die vom Generator abgegebene elektrische Leistung pauschal zu reduzieren. Ein insbesondere hinsichtlich einer weiterhin maximierten Ausgangsleistung des Wechselrichters optimales Betriebsverfahren muss vielmehr darauf Rücksicht nehmen, in welchem Bauteil des Wechselrichters die Übertemperatur konkret vorliegt. Wenn eine Übertemperatur im Gleichspannungswandler festgestellt wird, kann die Eingangsspannung in jedem Fall erhöht werden. Wenn hingegen eine Übertemperatur ausschließlich außerhalb des Gleichspannungswandlers, d.h. insbesondere in der Wechselrichterbrücke festgestellt wird, hängt die Richtung der Änderung der Eingangsspannung davon ab, in welchem Verhältnis die MPP-Spannung zu einer Grenzspannung liegt, wobei die Grenzspannung innerhalb des vom Wechselrichter einstellbaren MPP-Spannungsbereiches liegt.

Konkret bedeutet dies beispielsweise, dass es nicht vorteilhaft ist, die Eingangsspannung zu senken, wenn eine Übertemperatur im Gleichspannungswandler des Wechselrichters vorliegt und der Gleichspannungswandler getaktet betreiben wird, da dadurch der vom Generator erzeugte Gleichstrom und damit insbesondere Schaltverluste und ohmsche Verluste innerhalb des Gleichspannungswandlers ansteigen können; in diesem Fall führt vielmehr eine Erhöhung der Eingangsspannung zu einer optimalen Reduktion der Verlustleistung innerhalb des Gleichspannungswandlers. Wenn andererseits beispielsweise innerhalb der Wechselrichterbrücke eine Übertemperatur vorliegt, ist es nicht vorteilhaft, eine eingangsseitig an der Wechselrichterbrücke anliegende Spannung zu erhöhen, da Schaltverluste innerhalb der Wechselrichterbrücke von der eingangsseitig an der Wechselrichterbrücke anliegenden Spannung abhängen und ebenfalls erhöht werden können; in diesem Fall führt eine Reduktion der eingangsseitig an der Wechselrichterbrücke anliegende Spannung insbesondere durch eine Reduktion der Eingangsspannung zu einer optimalen Reduktion der Verlustleistung.

Ein Aspekt der Erfindung ist es somit, einerseits im Falle einer Übertemperatur innerhalb des Gleichspannungswandlers die Eingangsspannung zu erhöhen und andererseits im Falle einer Übertemperatur in der Wechselrichterbrücke unter Berücksichtigung der Lage der MPP-Spannung relativ zu einer Grenzspannung zu entscheiden, ob in einer konkreten Betriebssituation eine Erhöhung oder eine Reduktion der Eingangsspannung eine optimale Reduktion der Verlustleistung bewirkt.

In einer Ausführungsform der vorliegenden Erfindung kann die Minimalspannung des Gleichspannungszwischenkreises einer zum Einspeisen eines Wechselstroms in ein Wechselspannungsnetz minimal nötigen Zwischenkreisspannung entsprechen.

Die Grenzspannung kann fest vorgegeben sein oder optional in Abhängigkeit von den im Normalbetrieb mit maximal möglicher elektrischer Leistung ermittelten Temperaturwerten festgelegt wird. Dadurch kann erreicht werden, dass insbesondere in Situationen, in denen sich sowohl der erste Temperaturwert in dem Gleichspannungswandler als auch der zweite Temperaturwert in der Wechselrichterbrücke nahe an oder über ihren jeweiligen Grenzwerten befinden, keine gegenläufigen Effekte durch eine Änderung der Eingangsspannung in der einen oder anderen Richtung entstehen.

Beispielsweise führt eine Reduktion der Eingangsspannung, die aufgrund einer Übertemperatur innerhalb der Wechselrichterbrücke vorgenommen wird, während die MPP-Spannung unterhalb der Grenzspannung liegt, zu einer Erhöhung des vom Generator erzeugten Gleichstroms und damit zur Erhöhung der Verlustleistung innerhalb des Gleichspannungswandler, insbesondere wenn dieser getaktet betrieben wird. Diese Erhöhung der Verlustleistung innerhalb des Gleichspannungswandlers kann ihrerseits dazu führen, dass eine Übertemperatur im Gleichspannungswandler entsteht. Daher ist eine umso höhere Grenzspannung zu bevorzugen, je näher der erste Temperaturwert in dem Gleichspannungswandler an dem ihm zugeordneten Grenzwert liegt. Insbesondere kann die Grenzspannung dabei oberhalb der minimal nötigen Zwischenkreisspannung liegen.

Andererseits kann eine derartige durch eine Reduktion der Eingangsspannung bedingte Erhöhung der Verlustleistung innerhalb des Gleichspannungswandlers in Kauf genommen werden, wenn der erste Temperaturwert in dem Gleichspannungswandler deutlich unterhalb des ihm zugeordneten Grenzwertes liegt. Daher ist eine umso niedrigere Grenzspannung zu bevorzugen, je niedriger der Temperaturwert in dem Gleichspannungswandler ist. Dabei kann die Grenzspannung unterhalb der minimal nötigen Zwischenkreisspannung liegen.

Zusammengefasst bedeutet dies, dass die Grenzspannung so in Abhängigkeit von den Temperaturwerten im Gleichspannungswandler eingestellt werden kann, dass die im Falle einer Übertemperatur in der Wechselrichterbrücke bevorzugte Reduktion der Eingangsspannung jedenfalls dann durchgeführt wird, wenn eine mit dieser Reduktion verbundene Erhöhung der Verlustleistung im Gleichspannungswandler in Kauf genommen werden kann.

In einer Ausführungsform der Erfindung werden die Temperaturwerte jeweils wiederholt ermittelt und mit den ihnen jeweils zugeordneten Grenzwerten verglichen. Dadurch können die Bauteile des Wechselrichters fortlaufend hinsichtlich des Auftretens von Übertemperaturen überwacht werden. Wenn eine Übertemperatur festgestellt wurde, kann nach einer dadurch ausgelösten Änderung der Eingangsspannung gegenüber der MPP-Spannung die Differenz zwischen Eingangsspannung und MPP-Spannung vergrößert werden, wenn im Folgenden mindestens einer der ermittelten Temperaturwerte den ihm jeweils zugeordneten Grenzwert weiterhin überschreitet. Dadurch können die in den Bauteilen anfallenden Verlustleistungen weiter gesenkt werden, um sicherzustellen, dass die Bauteile nicht aufgrund einer dauerhaften Übertemperatur geschädigt werden. Insbesondere kann die Differenz zwischen Eingangsspannung und MPP-Spannung wiederholt vergrößert werden, bis eine Eingangsspannung erreicht ist, in der der Generator keine elektrische Leistung mehr liefert und somit innerhalb des Wechselrichters gar keine Verlustleistung mehr anfällt.

In einer weiteren Ausführungsform der Erfindung wird die Eingangsspannung des Wechselrichters im Normalbetrieb anhand eines MPP-Tracking-Verfahrens eingestellt, wenn alle ermittelten Temperaturwerte die ihnen jeweils zugeordneten Grenzwerte unterschreiten. Wenn einer der ermittelten Temperaturwerte den ihm zugeordneten Grenzwert überschreitet, d.h. wenn eine Übertemperatur im Wechselrichter festgestellt wird, wird die Eingangsspannung des Wechselrichter in Abhängigkeit von dem ersten Temperaturwert im Gleichspannungswandler und/oder in Abhängigkeit von dem zweiten Temperaturwert in der Wechselrichterbrücke eingestellt. Insbesondere kann zur Einstellung der Eingangsspannung des Wechselrichter in Abhängigkeit von einem Temperaturwert eine temperaturabhängige Regelung aktiviert wird, wenn einer der ermittelten Temperaturwerte den ihm zugeordneten Grenzwert überschreitet, wobei die temperaturabhängige Regelung wieder deaktiviert wird, wenn alle ermittelten Temperaturwerte die ihnen jeweils zugeordneten Grenzwerte unterschreiten. Durch eine derartige temperaturabhängige Regelung wird sichergestellt, dass einerseits eine durch die Änderung der Eingangsspannung bewirkte Reduktion der in den Bauteilen anfallenden Verlustleistung ausreichend ist, um die Temperaturwerte derart zu senken bzw. zu begrenzen, dass die ihnen jeweils zugeordneten Grenzwerte nicht dauerhaft überschritten werden, wobei andererseits die Differenz zwischen Eingangsspannung und MPP-Spannung und somit auch die Differenz zwischen momentaner und maximal möglicher Leistung des Generators minimiert ist, um die elektrische Leistung des Generators unter Berücksichtigung der thermischen Betriebsparameter des Wechselrichters zu maximieren. Es versteht sich, dass in dieser Ausführungsform Maßnahmen vorzusehen sind, die ein Hin- und Herschalten zwischen dem MPP-Tracking und der temperaturabhängigen Regelung im Falle eines abwechselnden Über- und Unterschreiten eines der den Temperaturwerten zugeordneten Grenzwerten verhindert, beispielsweise durch Verwendung einer entsprechenden Filterung der Temperaturwerte oder ein Hystereseband anstatt starrer Grenzwerte.

In einer Ausführungsform der Erfindung kann die Eingangsspannung auf null reduziert werden, insbesondere indem der Generator mittels des Gleichspannungswandlers oder mittels externer Schaltelemente kurzgeschlossen wird, wenn die Eingangsspannung aufgrund eines Überschreitens eines der Grenzwerte durch einen der ermittelten Temperaturwerte erhöht ist und die Eingangsspannung einen Grenzwert für die Eingangsspannung des Wechselrichters und/oder einen Grenzwert für die Zwischenkreisspannung übersteigt. Dadurch wird erreicht, dass eine Erhöhung der Eingangsspannung über das für den Wechselrichter verträgliche Maß hinaus verhindert wird, wobei gleichzeitig die Bauteile des Wechselrichters vor Beschädigungen durch dauerhafte Übertemperaturen geschützt werden.

In einer weiteren Ausführungsform der Erfindung kann die Eingangsspannung auf eine Leerlaufspannung des Generators erhöht werden, wenn ein Überschreiten des Grenzwertes für den ersten Temperaturwert in dem Gleichspannungswandler ermittelt wird, während die Eingangsspannung aufgrund eines Überschreitens des Grenzwertes für den zweiten Temperaturwert in der Wechselrichterbrücke reduziert ist und unterhalb einer minimal nötigen Zwischenkreisspannung liegt. Dies ist besonders vorteilhaft für den Fall, dass zunächst eine Übertemperatur in der Wechselrichterbrücke festgestellt und die Eingangsspannung reduziert wurde. Insbesondere durch die Reduktion der Eingangsspannung und ein damit verbundenes Aktivieren des Gleichspannungswandlers und/oder eine Erhöhung des vom Generator erzeugten Gleichstroms kann es zu einer zusätzlichen Übertemperatur im Gleichspannungswandler kommen. Dieser Übertemperatur kann sinnvoll entgegengewirkt werden, indem die Eingangsspannung auf die Leerlaufspannung erhöht wird, zumal eine weitere Reduktion der Eingangsspannung aufgrund der damit verbundenen Erhöhung des vom Generator erzeugten Gleichstroms die im Gleichspannungswandler anfallende Verlustleistung eher weiter erhöhen würde. Alternativ kann die Eingangsspannung auf null reduziert werden, insbesondere indem der Generator mittels des Gleichspannungswandlers kurzgeschlossen wird, wenn die Leerlaufspannung des Generators oberhalb des Grenzwertes für die Eingangsspannung des Wechselrichters und/oder des Grenzwertes für die Zwischenkreisspannung liegt.

In einer Ausführungsform der Erfindung können die Temperaturwerte in dem Gleichspannungswandler und/oder in der Wechselrichterbrücke anhand von Temperaturmodellen ermittelt werden. Dabei können die Temperaturmodelle Messwerte von Temperatursensoren verarbeiten, die dem Gleichspannungswandler und/oder der Wechselrichterbrücke zugeordnet sind. Die Temperaturwerte repräsentieren dabei bevorzugt Temperaturen an oder in Halbleiterschaltern des Gleichspannungswandlers und/oder der Wechselrichterbrücke. Diese Halbleiterschalter sind in der Regel sowohl die Bauteile, an denen die höchste Verlustleistung anfällt, als auch die temperaturkritischen Bauteile des Wechselrichters und müssen daher besonders überwacht werden.

Ein erfindungsgemäßer Wechselrichter für eine Energieerzeugungsanlage umfasst einen eingangsseitigen Gleichspannungswandler, eine ausgangsseitige Wechselrichterbrücke sowie eine Steuereinrichtung zur Ansteuerung des Gleichspannungswandlers und der Wechselrichterbrücke mit Steuersignalen. Darüber hinaus umfasst der Wechselrichter Temperatursensoren, die jeweils zu dem Gleichspannungswandler und zu der Wechselrichterbrücke zugeordnet sind. Der erfindungsgemäße Wechselrichter zeichnet sich dadurch aus, dass die Steuereinrichtung in Verbindung mit den Temperatursensoren dazu eingerichtet ist, ein erfindungsgemäßes Verfahren zur Änderung der Eingangsspannung des Wechselrichters im Falle einer Übertemperatur auszuführen.

In einer bevorzugten Ausführungsform des erfindungsgemäßen Wechselrichters ist der an den Wechselrichter anschließbare Generator ein Photovoltaikgenerator und/oder der Gleichspannungswandler ein Hochsetzsteller. Ein Hochsetzsteller profitiert besonders von den Vorteilen der Erfindung, da ein Hochsetzsteller in der Regel nur dann aktiviert ist, d.h. nur dann getaktet betrieben wird, wenn die MPP-Spannung des Generators unterhalb der minimal nötigen Zwischenkreisspannung liegt. Dabei kann der Gleichspannungswandler mindestens einen Halbleiterschalter und die Wechselrichterbrücke mindestens zwei Halbleiterschalter umfassen. Darüber hinaus kann die Wechselrichterbrücke eine ausgangsseitig angeordnete Filterinduktivität umfassen, für die anhand der Temperaturmodelle ein Temperaturwert der Filterinduktivität ermittelt wird, wobei der Temperaturwert der Filterinduktivität spezifisch für eine Temperatur in der Filterinduktivität ist und somit die Filterinduktivität anhand eines Vergleichs zwischen dem Temperaturwert der Filterinduktivität und einem ihm zugeordneten Grenzwert hinsichtlich einer Übertemperatur überwacht werden kann. Hinsichtlich der erfindungsgemäßen Auswahl der Richtung der Änderung der Eingangsspannung entspricht eine Übertemperatur in der Filterinduktivität dabei einer Übertemperatur in der Wechselrichterbrücke .

### KURZBESCHREIBUNG DER FIGUREN

Im Folgenden wird die Erfindung anhand in den Figuren dargestellter bevorzugter Ausführungsbeispiele weiter erläutert und beschrieben.
- Fig. 1: zeigt eine Energieerzeugungsanlage mit einem Wechselrichter,
- Fig. 2: zeigt vereinfachte Darstellungen einer Strom-Spannungs-Kennlinie und einer Leistungs-Spannungs-Kennlinie eines Photovoltaik-Generators,
- Fig. 3: zeigt eine Ausführungsform eines erfindungsgemäßen Verfahrens in Form eines Ablaufdiagramms,
- Fig. 4a: und Fig. 4b verdeutlichen eine Ausführung eines Verfahrens gemäß Fig. 3 anhand der vereinfachten beispielhaften Darstellungen der Kennlinien gemäß Fig. 2,
- Fig. 5: zeigt eine weitere Ausführungsform eines erfindungsgemäßen Verfahrens in Form eines Ablaufdiagramms, und
- Fig. 6: zeigt beispielhafte Zeitverläufe von Temperaturen und Spannungen in einer Energieerzeugungsanlage gemäß Fig. 1.

### FIGURENBESCHREIBUNG

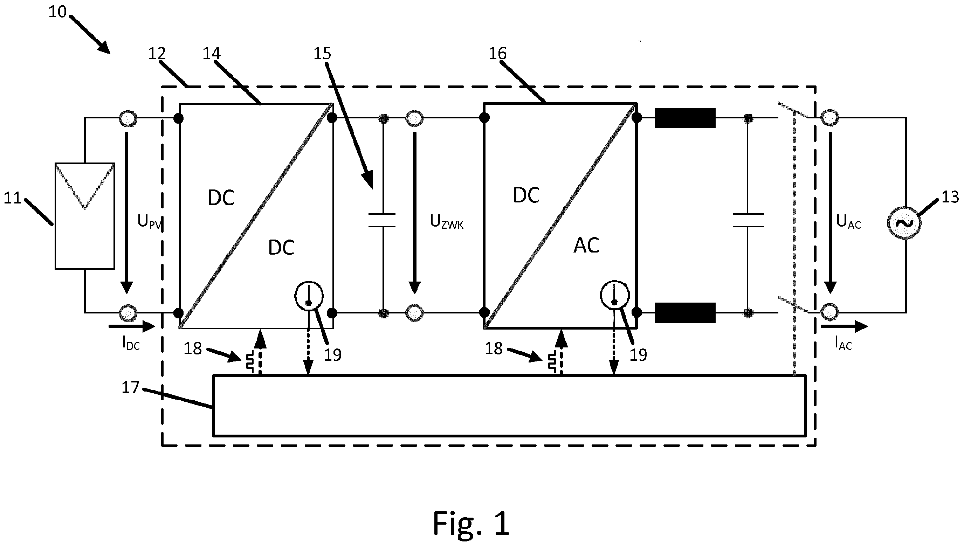

**Fig. 1** zeigt eine Energieerzeugungsanlage 10, in der eine von einem Photovoltaik-Generator 11 (PV-Generator) bereitgestellte elektrische Leistung von einem Wechselrichter 12 in ein Wechselspannungsnetz 13 eingespeist wird. Der Wechselrichter 12 umfasst einen Gleichspannungswandler 14 (DC-DC-Wandler), einen Gleichspannungszwischenkreis 15 (Zwischenkreis), eine Wechselrichterbrücke 16 (DC-AC-Brücke) und ausgangsseitig Filterinduktivitäten, eine Filterkapazität sowie Trenneinrichtungen. Der Gleichspannungswandler 14 umfasst mindestens ein Schaltelement, insbesondere einen Halbleiterschalter, der getaktet betrieben werden kann und insbesondere in Verbindung mit einer im Gleichspannungswandler 14 angeordneten Induktivität eine Spannungsübersetzung zwischen einer Eingangsspannung U_{PV}, die einer Spannung U_{PV} an dem PV-Generator 11 entspricht, und einer Zwischenkreisspannung U_{ZWK} am Zwischenkreis 15 bewirkt. Die Wechselrichterbrücke umfasst mindestens zwei Schaltelemente, insbesondere Halbleiterschalter, die getaktet betrieben werden können und eine Umformung der am Zwischenkreis 15 anliegenden Gleichspannung U_{ZWK} in eine ausgangsseitige Wechselspannung U_{AC} bewirken, so dass der eingangsseitig vom PV-Generator 11 erzeugte Gleichstrom I_{DC} in einen ausgangsseitigen Wechselstrom I_{AC} umgewandelt wird

Die Schaltelemente des Gleichspannungswandlers 14 und der Wechselrichterbrücke 16 werden von einer Steuereinrichtung 17 mit Schaltimpulsen 18 angesteuert, so dass ein eingangsseitig vom PV-Generator 11 erzeugter Gleichstrom I_{DC} in optimaler Weise in einen ausgangsseitig in das Wechselspannungsnetz 13 einspeisbaren Wechselstrom I_{AC} umgewandelt wird. Dazu wertet die Steuereinrichtung 17 insbesondere die Zwischenkreisspannung U_{ZWK} und die vom PV-Generator 11 erzeugte elektrische Leistung P_{PV} = U_{PV} × I_{DC} aus und stellt die Taktung der Schaltelemente des Gleichspannungswandlers 14 anhand der Schaltimpulse 18 und damit die Spannungsübersetzung zwischen U_{PV} und U_{ZWK} derart ein, dass einerseits eine zur Einspeisung elektrischer Leistung in das Wechselspannungsnetz 13 ausreichende Zwischenkreisspannung U_{ZWK} am Zwischenkreis 15 anliegt und andererseits die am PV-Generator 11 anliegende Eingangsspannung U_{PV} derjenigen Spannung U_{MPP} entspricht, bei der der PV-Generator 11 die maximal mögliche elektrische Leistung P_{MPP} liefert, d.h. bei der das Produkt aus der Spannung U_{PV} am PV-Generator 11 und dem vom PV-Generator 11 erzeugten Gleichstrom I_{DC} maximal ist. Ein derart eingestellter Arbeitspunkt wird allgemein als Maximum Power Point (MPP) bezeichnet und kann aufgrund sich ändernder Umgebungsbedingungen wie Einstrahlung und Umgebungstemperatur mit der Zeit variieren. Daher umfasst die Steuervorrichtung 17 ein geeignetes MPP-Tracking-Verfahren, um die Eingangsspannung U_{PV} auf die MPP-Spannung U_{MPP} des PV-Generators 11 einzustellen, insbesondere nachzuführen (sog. MPP-Tracking, kurz MPPT).

Der Wechselrichter 12 umfasst weiterhin Temperatursensoren 19 zur Erfassung von Temperaturen im Gleichspannungswandler 14, in der Wechselrichterbrücke 16 und optional in weiteren Bauteilen wie beispielsweise den ausgangsseitigen Filterinduktivitäten. Dabei können aus den erfassten Temperaturen weitere Temperaturwerte T einzelner Bauteile des Gleichspannungswandlers 14 und/oder der Wechselrichterbrücke 16, insbesondere Temperaturwerte T an oder in den dort verwendeten Schaltelementen, anhand von Temperaturmodellen ermittelt werden, indem die Temperaturmodelle solche Temperaturen, die an Positionen erfasst werden, die nicht den Positionen der Schaltelemente entsprechen, unter Berücksichtigung weiterer Parameter wie gemessener Spannungen, gemessener Ströme und/oder vorgegebener Eigenschaften der Ansteuersignale für die Schaltelemente auswerten und daraus Temperaturwerte berechnen, die für Temperaturen an oder in den Schaltelementen repräsentativ sind. Grundsätzlich können die Temperatursensoren 19 jedoch auch derart angeordnet sein, dass die erfassten Temperaturen selbst als relevante Temperaturwerte T verwendet werden können, insbesondere indem die Temperatursensoren 19 direkt an oder sogar in den Schaltelementen angeordnet sind.

Die ermittelten Temperaturwerte T werden überwacht, beispielsweise von der Steuereinrichtung 17, und mit ihnen jeweils zugeordneten Grenzwerten verglichen, um eine Beschädigung von Bauteilen des Wechselrichters durch Überhitzung zu vermeiden. Wenn einer der ermittelten Temperaturwerte T den ihr zugeordneten Grenzwert überschreitet, d.h. wenn eine Übertemperatur in einem der Bauteile des Wechselrichters 12 vorliegt, müssen geeignete Gegenmaßnahmen ergriffen werden, um die in den betroffenen Bauteilen entstehenden Verlustleistungen zu reduzieren oder, wenn dies nicht ausreicht, den Betrieb des Wechselrichters zumindest vorübergehend einzustellen.

Die in einem Bauteil entstehende Verlustleistung kann von verschiedenen Faktoren abhängen. Bei getakteten Halbleiterschaltern als Schaltelemente im Gleichspannungswandler 14 bzw. in der Wechselrichterbrücke 16 setzt sich die Verlustleistung zusammen aus Schaltverlusten, d.h. Verlusten während eines Schaltvorgangs, und Durchlassverlusten, d.h. Verlusten während des Leitens von Strom durch den Schalter. Die Schaltverluste sind im Wesentlichen proportional zu der im gesperrten Zustand über den Schalter abfallenden Spannung und dem im leitenden Zustand durch den Schalter fließenden Strom. Die Durchlassverluste im leitenden Zustand sind im Wesentlichen proportional zu der über den Schalter abfallenden Spannung (Rest- oder Durchlassspannung) und dem durch den Schalter fließenden Strom.

Das mindestens eine Schaltelement eines Gleichspannungswandlers 14 kann, insbesondere im Falle eines Tiefsetzstellers, in Reihe zwischen einem Anschluss des PV-Generators 11 und einem Anschluss des Zwischenkreises 15 oder, insbesondere im Falle eines Hochsetzstellers, parallel zu den jeweiligen Anschlüssen des PV-Generators 11 und des Zwischenkreises 15 angeordnet sein. Insbesondere im Falle eines Hochsetzstellers als Gleichspannungswandler 14, der eine Parallelschaltung des Schaltelementes mit dem Zwischenkreis 15 umfasst, entspricht die im gesperrten Zustand über dem Schaltelement abfallende Spannung der Zwischenkreisspannung U_{ZWK}.

Über die Schaltelemente der Wechselrichterbrücke, insbesondere über denen einer einphasigen H-Brücke und einer dreiphasigen B6- oder NPC-Brücke, fällt im gesperrten Zustand eine Spannung ab, die einer momentanen Differenz zwischen dem Potential eines der Anschlüsse des Zwischenkreises 15 und dem Potential eines der Anschlüsse an das Wechselspannungsnetz 13 entspricht. Dabei muss die Spannung des Zwischenkreises 15 höher als die Netzkuppenspannung bzw. höher als die maximale Differenz zwischen den Potenzialen der einzelnen Phasen des Wechselspannungsnetzes 13 sein, damit der Wechselrichter 12 elektrische Leistung in das Wechselspannungsnetz 13 einspeisen kann.

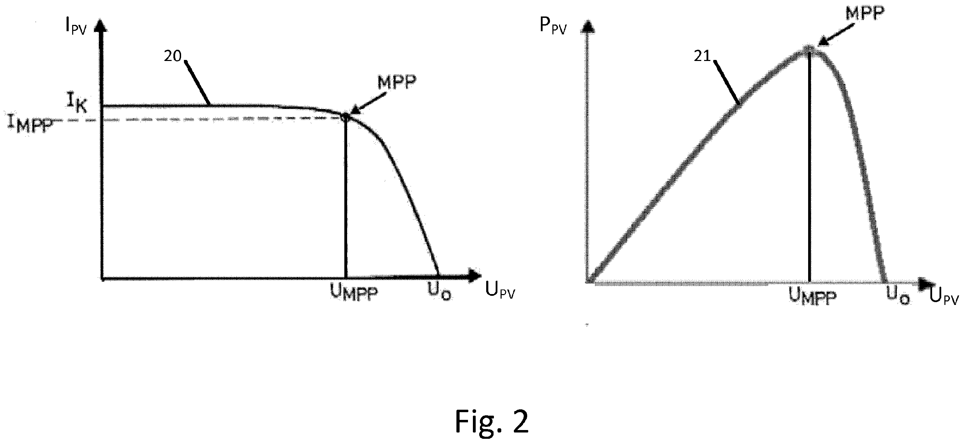

**Fig. 2** zeigt im linken Diagramm eine vereinfachte beispielhafte Darstellung einer Strom-Spannungs-Kennlinie 20 und im rechten Diagramm eine vereinfachte beispielhafte Darstellung einer Leistungs-Spannungs-Kennlinie 21 eines PV-Generators 11. Der PV-Generator 11 erzeugt einen maximalen Kurzschlussstrom I_{K}, wenn seine Anschlüsse kurzgeschlossen sind, d.h. wenn U_{PV} gleich null ist, beispielsweise aufgrund einen dauerhaft leitend geschalteten Schaltelement eines Hochsetzstellers, wobei die Leistung P_{PV} des PV-Generators 11 dann gleich null ist. Mit ansteigender Spannung U_{PV} fällt der Strom I_{PV} zunächst ab, während die Leistung P_{PV} des PV-Generators 11 ansteigt. Bei einer Spannung U_{PV} = U_{MPP} fließt ein Strom I_{MPP}, wobei das Produkt aus Spannung U_{PV} und Strom I_{PV} an diesem Arbeitspunkt maximal ist, d.h. der PV-Generator wird im Punkt maximaler Leistung, dem sog. Maximum Power Point (MPP) betrieben. Wird die Spannung U_{PV} weiter erhöht, so fällt der Strom I_{PV} weiter ab und wird gleich null, wenn die Spannung U_{PV} der Leerlaufspannung Uo des PV-Generators entspricht, wobei die Leistung P_{PV} des PV-Generators 11 dann ebenfalls gleich null ist.

Grundsätzlich wird ein Wechselrichter 12 zur optimalen Nutzung der auf einen PV-Generator 11 einfallenden Strahlungsleistung derart betrieben, dass an seinen Eingängen und damit am PV-Generator 11 eine Eingangsspannung U_{PV} anliegt, die der MPP-Spannung U_{MPP} des Generators entspricht. Dadurch fließt die maximal mögliche elektrische Leistung vom PV-Generator 11 in den Wechselrichter 12, wird vom Wechselrichter 12 in Wechselstrom umgewandelt und abzüglich der im Wechselrichter 12 auftretenden Verluste in das Wechselstromnetz 13 eingespeist. An jedem anderen bezüglich der Eingangsspannung U_{PV} nach links oder rechts vom MPP abweichenden Arbeitspunkt erzeugt der PV-Generator 11 eine reduzierte elektrische Leistung. Aus dem Stand der Technik ist es bekannt, im Falle einer drohenden Überhitzung von Bauteilen des Wechselrichters 12 einen vom MPP hinsichtlich der Eingangsspannung U_{PV} abweichenden Arbeitspunkt einzustellen, wobei davon ausgegangen wird, dass sich aufgrund der Reduzierung der vom Wechselrichter 12 umgewandelten elektrischen Leistung auch die Verlustleistung in den Bauteilen des Wechselrichters 12 reduziert.

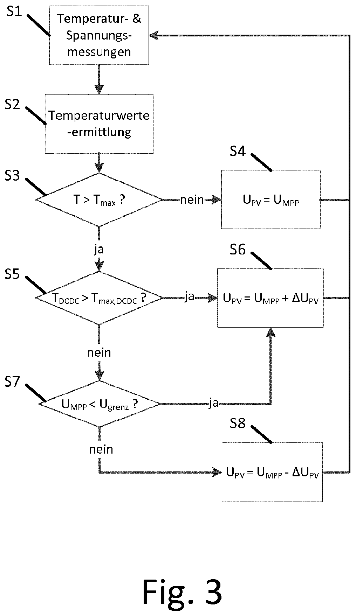

**Fig. 3** zeigt eine Ausführungsform eines erfindungsgemäßen Verfahrens, insbesondere zum Betrieb eines Wechselrichters 12 gemäß Fig. 1, in Form eines Ablaufdiagramms. Zunächst werden in einem Schritt S1 Temperaturen und Spannungen innerhalb des Wechselrichters 12 gemessen. Dabei werden die Temperaturen beispielsweise mittels der Temperatursensoren 19 erfasst. Die gemessenen Spannungen umfassen insbesondere die Spannung U_{ZWK} des Zwischenkreises 15 und die Eingangsspannung U_{PV}, wobei die Eingangsspannung U_{PV} zunächst der MPP-Spannung U_{MPP} entspricht, solange sich der Wechselrichters 12 in einem Normalbetriebszustand befindet, in dem ein MPP-Tracking durchgeführt wird. In einem Schritt S2 werden aus den in Schritt S1 gemessenen Temperaturen Temperaturwerte T ermittelt, die repräsentativ für die Temperaturen innerhalb einzelner Bauteile des Wechselrichters 12 sind und insbesondere Temperaturwerte T_{DCDC} des Gleichspannungswandlers 14 und Temperaturwerte T_{DCAC} der Wechselrichterbrücke 16 umfassen. Zur Ermittlung dieser Temperaturwerte T können Temperaturmodelle verwendet werden, in denen weitere Messwerte neben den in Schritt S1 erfassten Daten verarbeitet werden.

In einem Schritt S3 werden die in Schritt S2 ermittelten Temperaturwerte T mit ihnen jeweils zugeordneten Grenzwerten Tₘₐₓ verglichen, d.h. es wird überprüft, ob eine Übertemperatur im Wechselrichter 12 vorliegt. Dabei können die Grenzwerte Tₘₐₓ für die verschiedenen ermittelten Temperaturwerte T und damit für die verschiedenen Bauteile des Wechselrichters 12 unterschiedlich sein, insbesondere wenn verschiedene Typen von Schaltelementen im Wechselrichter verwendet werden, beispielsweise IGBTs im Gleichspannungswandler 14 und MOSFETs in der Wechselrichterbrücke 16 oder umgekehrt. Es können auch unterschiedliche Grenzwerte Tₘₐₓ für die Schaltelemente der Wechselrichterbrücke 16 verwendet werden, insbesondere wenn Schaltelemente unterschiedlicher Bauart in den einzelnen Brückenzweigen der Wechselrichterbrücke 16 verwendet werden.

In Schritt S3 wird entschieden, ob irgendeiner der ermittelten Temperaturwerte T den ihm jeweils zugeordneten Grenzwert Tₘₐₓ überschreitet. Wenn dies nicht der Fall ist, verzweigt das Verfahren zum Schritt S4 und der Wechselrichter wird weiterhin im Normalbetriebszustand und der PV-Generator 11 im MPP betrieben, wobei die Eingangsspannung U_{PV} des PV-Generators weiterhin der MPP-Spannung U_{MPP} entspricht. Anschließend wird das Verfahren mit Schritt S1 fortgesetzt, d.h. das Verfahren durchläuft zyklisch oder quasi-kontinuierlich die Schritte S1, S2, S3 und S4, solange in Schritt S3 keine Übertemperatur festgestellt wird. Wird in Schritt S3 jedoch festgestellt, dass irgendeiner der ermittelten Temperaturwerte T einen ihm jeweils zugeordneten Grenzwert Tₘₐₓ überschreitet, dann verzweigt das Verfahren zum Schritt S5. Im Schritt S5 wird überprüft, ob ein dem Gleichspannungswandler 14 zugeordneter Temperaturwert T_{DCDC}, der insbesondere für Temperaturen an oder in Schaltelementen des Gleichspannungswandlers 14 repräsentativ sein kann, einen ihm zugeordneten Grenzwert Tₘₐₓ,_{DCD}c überschreitet. Wenn dies der Fall ist, dann verzweigt das Verfahren zum Schritt S6. Im Schritt S6 wird eine Eingangsspannung U_{PV} eingestellt, die um einen Betrag ΔU_{PV} gegenüber der MPP-Spannung U_{MPP} erhöht ist. Dazu kann der Wechselrichter 12 insbesondere anhand der Steuereinrichtung 17 beispielsweise derart betrieben werden, dass der Gleichspannungswandler 14 modifizierte Steuersignale 18 erhält, die ein reduziertes Spannungsübersetzungsverhältnis zwischen U_{ZWK} und U_{PV} bewirken. Alternativ oder zusätzlich kann die Spannung U_{ZWK} des Zwischenkreises 15 und damit insbesondere bei deaktiviertem Gleichspannungswandler 14 auch die Eingangsspannung U_{PV} erhöht werden, beispielsweise indem die Wechselrichterbrücke 16 eine reduzierte elektrische Leistung in das Wechselstromnetz 13 einspeist.

Wird in Schritt S5 jedoch festgestellt, dass der dem Gleichspannungswandler 14 zugeordnete Temperaturwert T_{DCDC} einen ihm zugeordneten Grenzwert T_{max,DCDC} nicht überschreitet, was im Umkehrschluss bedeutet, dass ein anderer Temperaturwert T, insbesondere ein der Wechselrichterbrücke 16 zugeordneter Temperaturwert T_{DCAC}, der für Temperaturen in oder an Schaltelementes der Wechselrichterbrücke 16 repräsentativ ist, einen ihm jeweils zugeordneten Grenzwert Tₘₐₓ überschreitet, dann verzweigt das Verfahren zum Schritt S7.

Im Schritt S7 wird überprüft, ob die MPP-Spannung U_{MPP} unterhalb einer Grenzspannung U_{grenz} liegt. Wenn dies der Fall ist, verzweigt das Verfahren zum Schritt S6, in dem die Eingangsspannung U_{PV} um einen Betrag ΔU_{PV} gegenüber der MPP-Spannung U_{MPP} erhöht wird. Wird in Schritt S7 jedoch festgestellt, dass die MPP-Spannung U_{MPP} oberhalb der Grenzspannung U_{grenz} liegt, dann verzweigt das Verfahren zum Schritt S8. Im Schritt S8 wird eine Eingangsspannung U_{PV} eingestellt, die um einen Betrag ΔU_{PV} gegenüber der MPP-Spannung U_{MPP} reduziert ist. Dazu kann der Wechselrichter 12 insbesondere anhand der Steuereinrichtung 17 beispielsweise derart betrieben werden, dass der Gleichspannungswandler 14 modifizierte Steuersignale 18 erhält, die ein erhöhtes Spannungsübersetzungsverhältnis zwischen U_{ZWK} und U_{PV} bewirken. Alternativ oder zusätzlich kann die Wechselrichterbrücke 16 eine kurzfristig erhöhte elektrische Leistung in das Wechselstromnetz 13 einspeisen, wodurch die Spannung U_{ZWK} des Zwischenkreises 15 und damit insbesondere bei deaktiviertem Gleichspannungswandler 14 auch die Eingangsspannung U_{PV} sinkt, wobei die Wechselrichterbrücke 16 nach dem ausreichenden Absinken der Spannung U_{ZWK} des Zwischenkreises 15 eine gegenüber der MPP-Leistung reduzierte elektrische Leistung, die der vom PV-Generator 11 erzeugten reduzierten elektrischen Leistung entspricht, in das Wechselstromnetz 13 einspeist.

Im jeweiligen Anschluss an die Schritte S6 und S8 wird das Verfahren mit dem Schritt S1 fortgesetzt, d.h. das Verfahren durchläuft zyklisch oder quasi-kontinuierlich die Schritte S1, S2, S3 und ggf. S5 sowie S7. Wenn die in den Schritten S4 bzw. S6 vorgenommene Änderung der Eingangsspannung U_{PV} gegenüber der MPP-Spannung U_{MPP} und die dadurch bewirkte Reduzierung der in den Bauteilen des Wechselrichters 12 auftretenden Verlustleistung ausreichend ist, um die Temperaturwerte T soweit abzusenken, dass diese die ihnen zugeordneten Grenzwerte T_{grenz} nicht mehr überschreiten, wird das Verfahren wieder von Schritt S3 auf Schritt S4 verzweigen, so dass der Wechselrichter im Normalbetriebszustand und der PV-Generator 11 mit einer der MPP-Spannung U_{MPP} entsprechenden Eingangsspannung U_{PV} im MPP betrieben wird. Es empfiehlt sich dabei, eine einmal aufgrund einer festgestellten Übertemperatur eingeschlagene Richtung der Änderung der Eingangsspannung U_{PV} nach oben oder unten beizubehalten, solange die Übertemperatur im Wechselrichter 12 vorliegt.

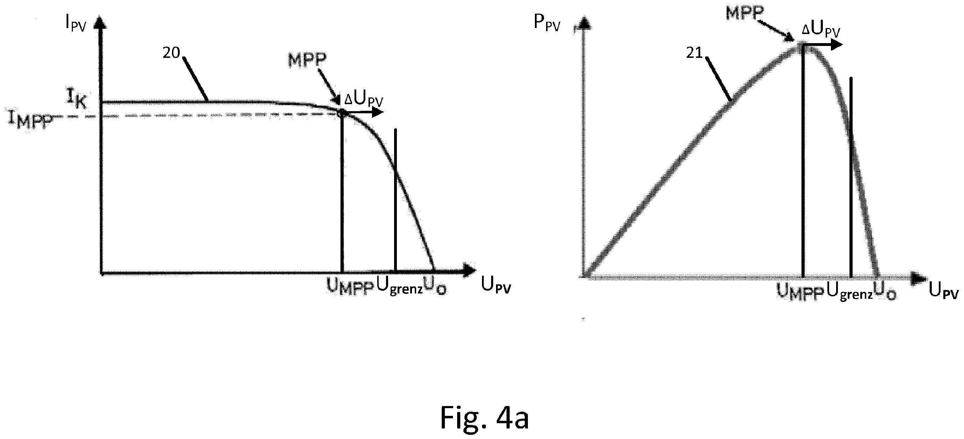

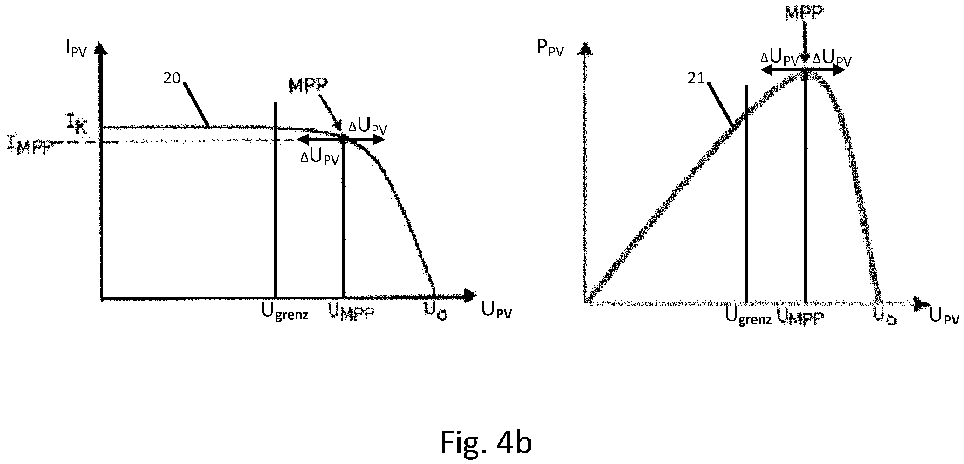

**Fig. 4a** und **Fig. 4b** verdeutlichen die Ausführung des Verfahrens gemäß Fig. 3 anhand vereinfachter beispielhafter Darstellungen der Kennlinien gemäß Fig. 2.

In Fig. 4a ist die Ausführung des Schrittes S6 gemäß Fig. 3 dargestellt. Im Normalbetriebszustand der Wechselrichters 12 wird der PV-Generator 11 bei einer Eingangsspannung U_{PV} betrieben, die der MPP-Spannung U_{MPP} entspricht, wobei die MPP-Spannung U_{MPP} unterhalb der Grenzspannung U_{grenz} liegt. Wenn nun in Schritt S3 eine Übertemperatur festgestellt wird, dann wird entweder aufgrund einer in Schritt S5 im Gleichspannungswandler 14 lokalisierten Übertemperatur oder aufgrund der in Schritt S7 festgestellten Relation zwischen U_{MPP} und U_{grenz} die Eingangsspannung U_{PV} um einen Betrag ΔU_{PV} gegenüber der MPP-Spannung U_{MPP} erhöht.

In Fig. 4b sind Kennlinien des PV-Generators 11 dargestellt, bei denen die MPP-Spannung U_{MPP} oberhalb der Grenzspannung U_{grenz} liegt. Welcher der Schritte S6 oder S8 gemäß Fig. 3 in diesem Falle bei Auftreten einer Übertemperatur ausgeführt wird, hängt davon ab, wo innerhalb des Wechselrichters 12 die Übertemperatur auftritt. Wenn die Übertemperatur im Gleichspannungswandler 14 auftritt (T_{DCDC} > T_{max,DCDC}), dann verzweigt das Verfahren gemäß Fig. 3 von Schritt S5 zu S6 und die Eingangsspannung U_{PV} wird um einen Betrag ΔU_{PV} gegenüber der MPP-Spannung U_{MPP} erhöht. Wenn die Übertemperatur jedoch nicht im Gleichspannungswandler 14 und somit insbesondere in der Wechselrichterbrücke 16 auftritt, dann verzweigt das Verfahren gemäß Fig. 3 von Schritt S6 über Schritt S7, in dem die Lage der MPP-Spannung U_{MPP} gegenüber der Grenzspannung U_{grenz} überprüft wird, zu Schritt S8 und die Eingangsspannung U_{PV} wird um einen Betrag ΔU_{PV} gegenüber der MPP-Spannung U_{MPP} gesenkt.

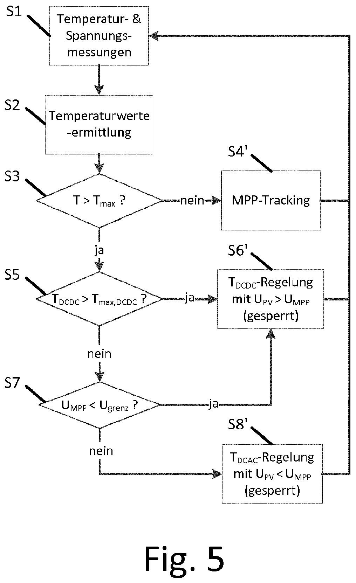

**Fig. 5** zeigt eine weitere Ausführungsform eines erfindungsgemäßen Verfahrens in Form eines Ablaufdiagramms. Gegenüber der Ausführungsform gemäß Fig. 3 wurden die Schritte S4, S6 und S8 durch die Schritte S4', S6' und S8' ersetzt. Dabei wird in Schritt S4' ein MPP-Tracking im Wechselrichter aktiviert, sofern keine Übertemperatur im Wechselrichter 12 festgestellt wird. Es bietet sich dabei an, die Schritte S1 bis S3 in demselben Takt wie die das MPP-Tracking zu durchlaufen, d.h. vor jedem neuen MPP-Tracking-Schritt die Temperaturwerte T mit den ihnen jeweils zugeordneten Grenzwerten Tₘₐₓ gemäß Schritt S3 zu vergleichen und anschließend den nächsten MPP-Tracking-Schritt durchzuführen (Schritt S4') bzw. zu Schritt S5 zu verzweigen, wenn eine Übertemperatur festgestellt wurde.

Wenn in Schritt S3 eine Übertemperatur festgestellt wurde und das Verfahren aufgrund einer Erfüllung der Bedingungen gemäß Schritt S5 oder Schritt S7 zu Schritt S6' verzweigt, wird anstelle des MPP-Trackings eine T_{DCDC}-Regelung aktiviert. Dabei werden die Eingangsspannung U_{PV} gegenüber der MPP-Spannung U_{MPP} und damit die im Wechselrichter 12 anfallende Verlustleistung reduziert. Unter Verwendung des dem Gleichspannungswandler 14 zugeordneten Temperaturwertes T_{DCDC} als Regelgröße wird in Schritt S6' die Eingangsspannung U_{PV} derart eingestellt, dass der jeweils aktuelle Temperaturwert T_{DCDC} im Gleichspannungswandler 14 als Istwert auf einen Sollwert Tₘₐₓ,_{DCD}c geregelt wird. Diese Regelung wird gesperrt, so dass sie aktiviert bleibt, solange in Schritt S3 eine Übertemperatur festgestellt wird, wobei durch Verwendung einer Hysterese in Schritt S3 ein Hin- und Herschalten zwischen einem MPP-Tracking gemäß S4' und der T_{DCDC}-Regelung gemäß Schritt S6' bei nur kurzfristigem Unterschreiten aller Grenzwerte Tₘₐₓ für die Temperaturwerte T verhindert wird.

Wenn in Schritt S3 eine Übertemperatur festgestellt wurde und keine der Bedingungen gemäß Schritt S5 oder S7 erfüllt sind, so dass das Verfahren zu Schritt S8' verzweigt, wird anstelle des MPP-Trackings eine T_{CCAC}-Regelung aktiviert. Dabei wird die Eingangsspannung U_{PV} gegenüber der MPP-Spannung U_{MPP} erhöht, so dass die vom PV-Generator 11 erzeugte elektrische Leistung und damit auch die im Wechselrichter 12 anfallende Verlustleistung reduziert wird. Unter Verwendung des der Wechselrichterbrücke 16 zugeordneten Temperaturwertes T_{DCAC} als Regelgröße wird in Schritt S6' die Spannung U_{PV} am PV-Generator 11 derart eingestellt, dass der jeweils aktuelle Temperaturwert T_{DCAC} in der Wechselrichterbrücke 16 als Istwert auf einen Sollwert T_{max,DCAC} geregelt wird. Diese Regelung wird gesperrt, so dass sie aktiviert bleibt, solange in Schritt S3 eine Übertemperatur festgestellt wird, wobei auch hier durch zeitliche Mittelung oder Filterung der erfassten Temperaturen oder der ermittelten Temperaturwerte T oder durch Verwendung einer Hysterese in Schritt S3 ein Hin- und Herschalten zwischen einem MPP-Tracking gemäß S4' und der T_{CCAC}-Regelung gemäß Schritt S6' bei nur kurzfristigem Unterschreiten aller Grenzwerte Tₘₐₓ für die Temperaturwerte T verhindert wird.

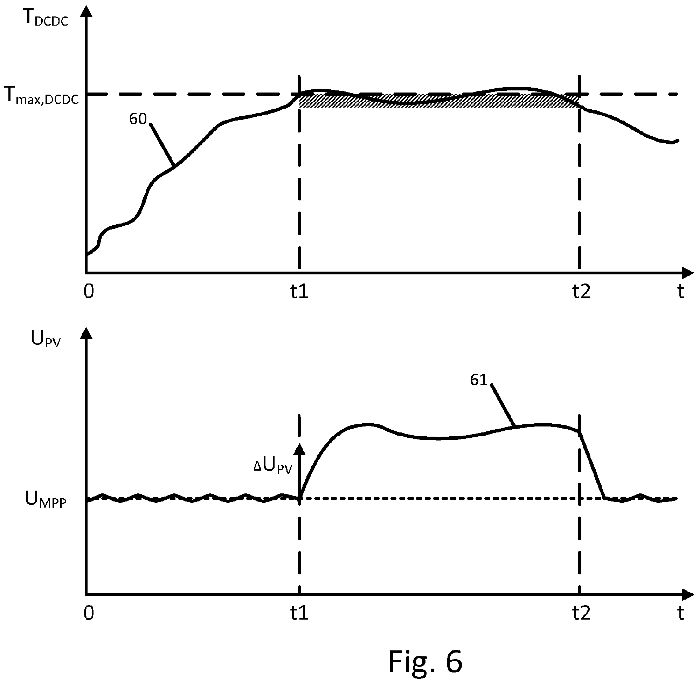

Fig. 6 zeigt im oberen Diagramm einen beispielhaften Zeitverlauf 60 des Temperaturwertes T_{DCDC} in einem Gleichspannungswandler 14 und im unteren Diagramm einen beispielhaften Zeitverlauf 61 der Eingangsspannung U_{PV} eines Wechselrichters 12 einer Energieerzeugungsanlage gemäß Fig. 1. Im Zeitraum t=0 bis t=t1 liegt der Temperaturwert T_{DCDC} unterhalb des ihnen zugeordneten Grenzwertes T_{max,DCDC}, so dass unter der Voraussetzung, dass keine anderweitigen Übertemperaturen in Schritt S3 gemäß Fig. 3 bzw. Fig. 5 festgestellt werden, die Eingangsspannung U_{PV} anhand eines MPP-Tracking auf die MPP-Spannung U_{MPP} eingestellt wird. Der Wechselrichter 12 arbeitet im Normalbetriebsmodus.

Am Zeitpunkt t1 übersteigt der Temperaturwert T_{DCDC} den ihm zugeordneten Grenzwert T_{max,DCDC}, beispielsweise aufgrund einer im Laufe eines Tages gestiegenen Umgebungstemperatur außerhalb des Wechselrichters 12 und/oder aufgrund einer gestiegenen vom PV-Generator 11 und im Wechselrichter 12 umgewandelten elektrischen Leistung, so dass in Schritt S6 gemäß Fig. 3 bzw. in Schritt S6' gemäß Fig. 5 die Eingangsspannung U_{PV} gegenüber der MPP-Spannung U_{MPP} erhöht und ggf. eine T_{DCDC}-Regelung aktiviert wird. Dadurch wird die im Gleichspannungswandler 14 anfallende Verlustleistung reduziert und der Anstieg der Temperatur T_{DCDC} verlangsamt sich. Solange die Temperaturwerte T_{DCDC} oberhalb T_{max,DCDC} liegen, wird die Spannung U_{PV} insbesondere im Rahmen der T_{DCDC}-Regelung gemäß Schritt S6' weiter erhöht, bis die im Gleichspannungswandler 14 anfallende Verlustleistung soweit reduziert ist, dass der Temperaturwert T_{DCDC} wieder bis auf den Grenzwert T_{max,DCDC} gesunken ist. In einem Regelkreis mit dem dem Gleichspannungswandler 14 zugeordneten Temperaturwert T_{DCDC} als Regelgröße, der Spannung U_{PV} als Stellgröße und dem Grenzwert Tₘₐₓ,_{DCDC} als Sollwert wird die Spannung U_{PV} nun derart eingestellt, dass der jeweils aktuelle Temperaturwert T_{DCDC} im Gleichspannungswandler 14 im Wesentlichen dem Grenzwert Tₘₐₓ,_{DCD}c entspricht, wobei eine geringfügiges Unterschreiten des Grenzwertes Tₘₐₓ,_{DCD}c in das schraffiert dargestellten Hystereseband zugelassen wird und aufgrund der T_{DCDC}-Regelung zu einem beispielsweise proportionalen Absenken der Eingangsspannung U_{PV} führt. Im Ablaufdiagram gemäß Fig. 5 kann das Hystereband implementiert werden, indem nach dem Aktivieren der T_{DCDC}-Regelung in Schritt S6' die Grenzwerte Tₘₐₓ in Schritt S3 bzw. Tₘₐₓ,_{DCD}c in Schritt S5 durch um die Breite des Hysterebandes reduzierte Grenzwerte Tₘₐₓ ersetzt werden.

Ab dem Zeitpunkt t2 ist der Temperaturwert T_{DCDC} unter den Grenzwert T_{max,DCDC} gesunken und hat das Hystereband nach unten verlassen, beispielsweise aufgrund einer Umgebungstemperatur außerhalb des Wechselrichters, die soweit gesunkenen ist, dass durch Wärmeabstrahlung eine ausreichende Abfuhr der in den Bauteilen des Wechselrichters 12 anfallenden Verlustleistung gewährleistet ist. Daher wird in Schritt S3 keine Übertemperatur mehr festgestellt und es wird in Schritt S4 gemäß Fig. 3 eine der MPP-Spannung U_{MPP} entsprechende Eingangsspannung U_{PV} eingestellt bzw. das Verfahren gemäß Fig. 5 zweigt zu Schritt S4' ab, so dass das MPP-Tracking wieder aktiviert wird. Die Eingangsspannung U_{PV} wird daher wieder in Richtung der maximalen elektrischen Leistung geführt, d.h. beispielsweise gemäß Fig. 4a gesenkt. Sobald die MPP-Spannung U_{MPP} erreicht ist, arbeitet der Wechselrichter 12 wieder im Normalbetriebsmodus.

### Bezugszeichenliste

- 10: Energieerzeugungsanlage
- 11: Photovoltaik-Generator
- 12: Wechselrichter
- 13: Wechselspannungsnetz
- 14: Gleichspannungswandler
- 15: Gleichspannungszwischenkreis
- 16: Wechselrichterbrücke
- 17: Steuereinrichtung
- 18: Steuersignal
- 19: Temperatursensor
- 20: Strom-Spannungs-Kennlinie
- 21: Leistungs-Spannungs-Kennlinie
- 60, 61: Zeitverlauf
- S1 - S8: Verfahrensschritt
- S4', S6', S8': Verfahrensschritt

## Patentansprüche

1. Verfahren zum Betrieb eines Wechselrichters (12) mit einem eingangsseitigen Gleichspannungswandler (14), der als Hochsetzsteller ausgeführt ist, und einer ausgangsseitigen Wechselrichterbrücke (16), wobei eine Eingangsspannung (U_{PV}) des Wechselrichters (12) durch den Gleichspannungswandler (14) oder die Wechselrichterbrücke (16) eingestellt wird, wobei die Eingangsspannung (U_{PV}) im Normalbetrieb des Wechselrichters (12) einer MPP-Spannung (U_{MPP}) entspricht, bei der ein eingangsseitig anschließbarer Generator (11) eine maximale elektrische Leistung abgibt, wobei der Hochsetzsteller nur dann aktiviert ist, d.h. getaktet betrieben wird, wenn die MPP-Spannung (U_{MPP}) des Generators (11) unterhalb einer minimal nötigen Spannung (U_{ZWK,min}) eines Gleichspannungszwischenkreises (15) des Wechselrichters (12) liegt, wobei ein erster Temperaturwert (T_{DCDC}) in dem Gleichspannungswandler (14) und ein zweiter Temperaturwert (T_{DCAC}) in der Wechselrichterbrücke (16) ermittelt werden und die Eingangsspannung (U_{PV}) des Wechselrichters (12) gegenüber der MPP-Spannung (U_{MPP}) geändert wird, wenn der ermittelte erste Temperaturwert (T_{DCDC}) einen ihm zugeordneten Grenzwert (T_{max,DCDC}) oder der ermittelte zweite Temperaturwert (T_{DCAC}) einen ihm zugeordneten Grenzwert (T_{max,DCAC}) überschreitet, **dadurch gekennzeichnet, dass** die Eingangsspannung (U_{PV}) gegenüber der MPP-Spannung (U_{MPP}) erhöht wird, wenn ein Überschreiten des Grenzwertes (T_{max,DCDC}) für den ersten Temperaturwert (T_{DCDC}) in dem Gleichspannungswandler (14) ermittelt wird und/oder die MPP-Spannung (U_{MPP}) unterhalb einer vorgegebenen Grenzspannung (U_{grenz}) liegt, wobei die Grenzspannung (U_{grenz}) innerhalb eines vom Wechselrichter einstellbaren MPP-Spannungsbereiches liegt und zwischen 80% und 120% der Minimalspannung (U_{ZWK,min}) des Gleichspannungszwischenkreises (15) des Wechselrichters (12) beträgt, und dass die Eingangsspannung (U_{PV}) andernfalls gegenüber der MPP-Spannung (U_{MPP}) reduziert wird.

2. Verfahren nach Anspruch 1, **dadurch gekennzeichnet, dass** die Minimalspannung (U_{ZWK,min}) des Gleichspannungszwischenkreises (15) einer zum Einspeisen eines Wechselstroms (I_{AC}) in ein Wechselspannungsnetz (13) minimal nötigen Zwischenkreisspannung (U_{ZWK,min}) entspricht.

3. Verfahren nach einem der vorangehenden Ansprüche, **dadurch gekennzeichnet, dass** die Grenzspannung (U_{grnez}) in Abhängigkeit von den im Betrieb mit maximal möglicher elektrischer Leistung ermittelten Temperaturwerten (T_{DCDC}, T_{DCAC}) festgelegt wird.

4. Verfahren nach einem der vorangehenden Ansprüche, **dadurch gekennzeichnet, dass** die Temperaturwerte (T_{DCDC}, T_{DCAC}) jeweils wiederholt ermittelt und mit den ihnen jeweils zugeordneten Grenzwerten (T_{max,DCDC}, T_{max,DCAC}) verglichen werden.

5. Verfahren nach Anspruch 4, **dadurch gekennzeichnet, dass** nach einer Änderung der Eingangsspannung (U_{PV}) gegenüber der MPP-Spannung (U_{MPP}) die Differenz zwischen Eingangsspannung (U_{PV}) und MPP-Spannung (U_{MPP}) vergrößert wird, wenn mindestens einer der ermittelten Temperaturwerte (T_{DCDC}, T_{DCAC}) den ihm jeweils zugeordneten Grenzwert (T_{max,DCDC}, T_{max,DCAC}) weiterhin überschreitet.

6. Verfahren nach einem der vorangehenden Ansprüche, **dadurch gekennzeichnet, dass** zur Einstellung der Eingangsspannung (U_{PV}) des Wechselrichters (12) in Abhängigkeit von einem Temperaturwert (T_{DCDC}, T_{DCAC}) eine temperaturabhängige Regelung aktiviert wird, wenn einer der ermittelten Temperaturwerte (T_{DCDC}, T_{DCAC}) den ihm zugeordneten Grenzwert (T_{max,DCDC}, T_{max,DCAC}) überschreitet, wobei die temperaturabhängige Regelung deaktiviert wird, wenn alle ermittelten Temperaturwerte (T_{DCDC}, T_{DCAC}) die ihnen jeweils zugeordneten Grenzwerte (T_{max,DCDC}, T_{max,DCAC}) unterschreiten.

7. Verfahren nach einem der vorangehenden Ansprüche, **dadurch gekennzeichnet, dass** die Eingangsspannung (U_{PV}) auf null reduziert wird, insbesondere indem der Generator (11) mittels des Gleichspannungswandlers (14) kurzgeschlossen wird, wenn die Eingangsspannung (U_{PV}) aufgrund eines Überschreitens eines der Grenzwerte (T_{max,DCDC}, T_{max,DCAC}) durch einen der ermittelten Temperaturwerte (T_{DCDC}, T_{DCAC}) erhöht ist und einen Grenzwert (U_{PV,max}) für die Eingangsspannung (U_{PV}) des Wechselrichters (12) und/oder einen Grenzwert (U_{ZWK,max}) für die Zwischenkreisspannung (U_{ZWK}) übersteigt.

8. Verfahren nach einem der vorangehenden Ansprüche, **dadurch gekennzeichnet, dass** die Eingangsspannung (U_{PV}) auf eine Leerlaufspannung (Uo) des Generators (11) erhöht wird, wenn ein Überschreiten des Grenzwertes (T_{max,DCDC}) für den ersten Temperaturwert (T_{DCDC}) in dem Gleichspannungswandler (14) ermittelt wird, während die Eingangsspannung (U_{PV}) aufgrund eines Überschreitens des Grenzwertes (T_{max,DCAC}) für den zweiten Temperaturwert (T_{DCAC}) in der Wechselrichterbrücke (16) reduziert ist und unterhalb einer minimal nötigen Zwischenkreisspannung (U_{ZWK,min}) liegt.

9. Verfahren nach Anspruch 8, **dadurch gekennzeichnet, dass** die Eingangsspannung (U_{PV}) auf null reduziert wird, insbesondere indem der Generators (11) mittels des Gleichspannungswandlers (14) kurzgeschlossen wird, wenn die Leerlaufspannung (Uo) des Generators (11) oberhalb des Grenzwertes (U_{PV,max}) für die Eingangsspannung (U_{PV}) des Wechselrichters (12) und/oder des Grenzwertes (U_{ZWK,max}) für die Zwischenkreisspannung (U_{ZWK}) liegt.

10. Verfahren nach einem der vorangehenden Ansprüche, **dadurch gekennzeichnet, dass** die Temperaturwerte (T_{DCDC}, T_{DCAC}) in dem Gleichspannungswandler (14) und/oder in der Wechselrichterbrücke (16) anhand von Temperaturmodellen ermittelt werden, wobei die Temperaturmodelle Messwerte von Temperatursensoren (19) verarbeiten, die dem Gleichspannungswandler (14) und/oder der Wechselrichterbrücke (16) zugeordnet sind, und wobei die Temperaturwerte (T_{DCDC}, T_{DCAC}) Temperaturen an oder in Halbleiterschaltern des Gleichspannungswandlers (14) und/oder der Wechselrichterbrücke (16) repräsentieren.

11. Wechselrichter (12) für eine Energieerzeugungsanlage (10), wobei der Wechselrichter (12) einen eingangsseitigen Gleichspannungswandler (14), der als Hochsetzsteller ausgeführt ist, eine ausgangsseitige Wechselrichterbrücke (16), eine Steuereinrichtung (17) zur Ansteuerung des Gleichspannungswandlers (14) und der Wechselrichterbrücke (16) mit Steuersignalen (18) sowie zu dem Gleichspannungswandler (14) und zu der Wechselrichterbrücke (16) jeweils zugeordnete Temperatursensoren (19) umfasst, **dadurch gekennzeichnet, dass** die Steuereinrichtung (17) dazu eingerichtet ist, ein Verfahren nach einem der Ansprüche 1 bis 10 auszuführen.

12. Wechselrichter (12) nach Anspruch 11, **dadurch gekennzeichnet, dass** eingangsseitig an den Wechselrichter (12) ein Generator (11), insbesondere ein Photovoltaikgenerator anschließbar ist.

13. Wechselrichter nach einem der Ansprüche 11 bis 12, **dadurch gekennzeichnet, dass** der Gleichspannungswandler (14) mindestens einen Halbleiterschalter umfasst und die Wechselrichterbrücke (16) mindestens zwei Halbleiterschalter umfasst.

14. Wechselrichter (12) nach einem der Ansprüche 11 bis 13, **dadurch gekennzeichnet, dass** die Wechselrichterbrücke (16) eine ausgangsseitig angeordnete Filterinduktivität umfasst.

## Claims

1. A method for operating an inverter (12) comprising an input-side DC-DC converter (14) that is configured as a boost converter, and an output side inverter bridge (12), wherein an input voltage (U_{PV}) of the inverter (12) is set by the DC-DC converter (14) or the inverter bridge (16), wherein the input voltage (U_{PV}) during normal operating mode of the inverter (12) corresponds to an MPP voltage (U_{MPP}) at which a generator (11) connectable on the input side outputs a maximum electrical power, wherein the boost converter is activated, i.e. operated in a clocked fashion, only if the MPP voltage (U_{MPP}) of the generator (11) lies below a minimum required voltage (U_{ZWK,min}) of a DC voltage link circuit (15) of the inverter (12), wherein a first temperature value (T_{DCDC}) in the DC-DC converter (14) and a second temperature value (T_{DCAC}) in the inverter bridge (16) are determined and the input voltage (U_{PV}) of the inverter (12) is changed with respect to the MPP voltage (U_{MPP}) if the determined first temperature value (T_{DCDC}) exceeds a limit value (T_{max,DCDC}) assigned to it, or if the determined first temperature values (T_{DCAC}) exceeds a limit value (T_{MAX,DCAC}) assigned to it, respectively, **characterised in that** the input voltage (U_{PV}) is increased with respect to the MPP voltage (U_{MPP}) if an exceedance of the limit value (T_{max,DCDC}) for the first temperature value (T_{DCDC}) in the DC-DC converter (14) is determined and/or the MPP voltage (U_{MPP}) lies below a predefined limit voltage (Uₗᵢₘᵢₜ), wherein the limit voltage (Uₗᵢₘᵢₜ) lies within a MPP voltage range settable by the inverter and between 80% and 120% of the minimum voltage (U_{ZWK,min}) of the DC voltage link circuit (15) of the inverter (12), and **in that** the input voltage (U_{PV}) is otherwise reduced with respect to the MPP voltage (U_{MPP}) .

2. The method as claimed in claim 1, **characterised in that** the minimum voltage (U_{ZWK,min}) of the DC voltage link circuit (15) corresponds to a minimum required link circuit voltage (U_{ZWK,min}) for feeding an AC current (I_{AC}) into an AC voltage grid (13).

3. The method as claimed in any of the preceding claims, **characterised in that** the limit voltage (Uₗᵢₘᵢₜ) is defined depending on the temperature values (T_{DCDC}, T_{DCAC}) determined during operation with maximum possible electrical power.

4. The method as claimed in any of the preceding claims, **characterised in that** the temperature values (T_{DCDC}, T_{DCAC}) are in each case determined repeatedly and compared with the limit values (T_{max,DCDC}, T_{max,DCAC}) respectively assigned to them.

5. The method as claimed in claim 4, **characterised in that** after a change of the input voltage (U_{PV}) with respect to the MPP voltage (U_{MPP}) the difference between input voltage (U_{PV}) and MPP voltage (U_{MPP}) is increased if at least one of the determined temperature values (T_{DCDC}, T_{DCAC}) still exceeds the limit value (T_{max,DCDC}, T_{max,DCAC}) respectively assigned to it.

6. The method as claimed in any of the preceding claims, **characterised in that** a temperature-dependent regulation is activated for setting the input voltage (U_{PV}) of the inverter (12) depending on a temperature value (T_{DCDC}, T_{DCAC}) if one of the determined temperature values (T_{DCDC}, T_{DCAC}) exceeds the limit value (T_{max,DCDC}, T_{max,DCAC}) assigned to it, wherein the temperature-dependent regulation is deactivated if all the determined temperature values (T_{DCDC}, T_{DCAC}) fall below the limit values (T_{max,DCDC}, T_{max,DCAC}) respectively assigned to them.

7. The method as claimed in any of the preceding claims, **characterised in that** the input voltage (U_{PV}) is reduced to zero, in particular by the generator (11) being short-circuited by means of the DC-DC converter (14), if the input voltage (U_{PV}) is increased on account of an exceedance of one of the limit values (T_{max,DCDC}, T_{max,DCAC}) by one of the determined temperature values (T_{DCDC}, T_{DCAC}) and exceeds a limit value (U_{PV,max}) for the input voltage (U_{PV}) of the inverter (12) and/or a limit value (U_{ZWK,max}) for the link circuit voltage (U_{ZWK}).

8. The method as claimed in any of the preceding claims, **characterised in that** the input voltage (U_{PV}) is increased to an open circuit voltage (Uo) of the generator (11) if an exceedance of the limit value (T_{max,DCDC}) for the first temperature value (T_{DCDC}) in the DC-DC converter (14) is determined, while the input voltage (U_{PV}) is reduced on account of an exceedance of the limit value (T_{max,DCAC}) for the second temperature value (T_{DCAC}) in the inverter bridge (16) and lies below a minimum required link circuit voltage (U_{ZWK,min}) .

9. The method as claimed in claim 8, **characterised in that** the input voltage (U_{PV}) is reduced to zero, in particular by the generator (11) being short-circuited by means of the DC-DC converter (14), if the open circuit voltage (Uo) of the generator (11) lies above the limit value (U_{PV,max}) for the input voltage (U_{PV}) of the inverter (12) and/or the limit value (U_{ZWK,max}) for the link circuit voltage (U_{ZWK}).

10. The method as claimed in any of the preceding claims, **characterised in that** the temperature values (T_{DCDC}, T_{DCAC}) in the DC-DC converter (14) and/or in the inverter bridge (16) are determined on the basis of temperature models, wherein the temperature models process measurement values of temperature sensors (19) which are assigned to the DC-DC converter (14) and/or to the inverter bridge (16), and wherein the temperature values (T_{DCDC}, T_{DCAC}) represent temperatures at or in semiconductor switches of the DC-DC converter (14) and/or of the inverter bridge (16).

11. An inverter (12) for an energy generating installation (10), wherein the inverter (12) comprises an input-side DC-DC converter (14) configured as a boost converter, an output-side inverter bridge (16), a control device (17) for driving the DC-DC converter (14) and the inverter bridge (16) with control signals (18), and temperature sensors (19) respectively assigned to the DC-DC converter (14) and to the inverter bridge (16), **characterised in that** the control device (17) is configured to perform a method according to any of claims 1 to 10.

12. The inverter (12) as claimed in claim 11, **characterised in that** a generator (11), in particular a photovoltaic generator, is connectable to the inverter (12) on the input side.

13. The inverter as claimed in either of claims 11 to 12, **characterised in that** the DC-DC converter (14) comprises at least one semiconductor switch and the inverter bridge (16) comprises at least two semiconductor switches.

14. The inverter as claimed in any of claims 11 to 13, **characterised in that** the inverter bridge (16) comprises a filter inductance arranged on the output side.

## Revendications

1. Procédé pour faire fonctionner un onduleur (12) avec un convertisseur DC/DC (14) côté entrée, qui est conçu comme un convertisseur élévateur, et un pont onduleur (16) côté sortie, une tension d'entrée (U_{PV}) de l'onduleur (12) étant réglée par le convertisseur DC/DC (14) ou le pont onduleur (16), dans lequel la tension d'entrée (U_{PV}) en fonctionnement normal de l'onduleur (12) correspond à une tension MPP (U_{MPP}) à laquelle un générateur (11) qui peut être connecté du côté entrée fournit une puissance électrique maximale, le convertisseur élévateur n'étant exploité de manière cadencée que si la tension MPP (U_{MPP}) du générateur (11) est inférieure à une tension minimale requise (U_{ZWK,min}) d'un circuit intermédiaire DC (15) de l'onduleur (12) dans lequel une première valeur de température (T_{DCDC}) est déterminée dans le convertisseur DC/DC (14) et une seconde valeur de température (T_{DCAC}) est déterminée dans le pont onduleur (16) et la tension d'entrée (U_{PV}) de l'onduleur (12) est modifiée par rapport à la tension MPP (U_{MPP}) si la première valeur de température déterminée (T_{DCDC}) dépasse une valeur limite (T_{max,DCDC}) qui lui est attribuée ou si la deuxième valeur de température déterminée (T_{DCAC}) dépasse une valeur limite (T_{max,DCAC}) qui lui est attribuée, **caractérisé en ce que** la tension d'entrée (U_{PV}) est augmentée par rapport à la tension MPP (U_{MPP}) si un dépassement de la valeur limite (T_{max,DCDC}) pour la première valeur de température (T_{DCDC}) dans le convertisseur DC/DC (14) est déterminée et/ou la tension MPP (U_{MPP}) est inférieure à une tension limite prédéterminée (U_{grenz}), dans lequel la tension limite (U_{grenz}) se situe dans une plage de tension MPP réglable par l'onduleur et est comprise entre 80 % et 120 % de la tension minimale (U_{ZWK,min}) du circuit intermédiaire DC (15) de l'onduleur (12), et **en ce que** la tension d'entrée (U_{PV}) est autrement réduite par rapport à la tension MPP (U_{MPP}).

2. Procédé selon la revendication 1, **caractérisé en ce que** la tension minimale (U_{ZWK,min}) du circuit intermédiaire DC (15) correspond à une tension minimale de circuit intermédiaire DC (U_{ZWK,min}) nécessaire pour alimenter un courant alternatif (I_{AC}) dans un réseau de tension alternative (13).

3. Procédé selon l'une des revendications précédentes, **caractérisé en ce que** la tension limite (U_{grenz}) est déterminée en fonction des valeurs de température (T_{DCDC}, T_{DCAC}) déterminées lors du fonctionnement avec la puissance électrique maximale possible.

4. Procédé selon l'une des revendications précédentes, **caractérisé en ce que** les valeurs de température (T_{DCDC}, T_{DCAC}) sont déterminées à chaque fois de manière répétée et comparées aux valeurs limites (T_{max,DCDC}, T_{max,DCAC}) qui leur sont respectivement attribuées.

5. Procédé selon la revendication 4, **caractérisé en ce que,** après une modification de la tension d'entrée (U_{PV}) par rapport à la tension MPP (U_{MPP}), la différence entre la tension d'entrée (U_{PV}) et la tension MPP (U_{MPP}) est augmentée si au moins une des valeurs de température déterminées (T_{DCDC}, T_{DCAC}) continue à dépasser la valeur limite (T_{max,DCDC}, T_{max,DCAC}) qui lui est respectivement attribuée.

6. Procédé selon l'une des revendications précédentes, **caractérisé en ce que,** pour régler la tension d'entrée (U_{PV}) de l'onduleur (12) en fonction d'une valeur de température (T_{DCDC}, T_{DCAC}), une régulation en fonction de la température est activée lorsqu'une des valeurs de température déterminées (T_{DCDC}, T_{DCAC}) dépasse la valeur limite (T_{max,DCDC}, T_{max,DCAC}) qui lui est attribuée, la régulation en fonction de la température étant désactivée lorsque toutes les valeurs de température (T_{DCDC}, T_{DCAC}) déterminées passent en dessous des valeurs limites (T_{max,DCDC}, T_{max,DCAC}) qui leur sont respectivement attribuées.

7. Procédé selon l'une des revendications précédentes, **caractérisé en ce que** la tension d'entrée (U_{PV}) est réduite à zéro, notamment en court-circuitant le générateur (11) au moyen du convertisseur DC/DC (14), lorsque la tension d'entrée (U_{PV}) est réduite à zéro en raison du dépassement d'une des valeurs limites (T_{max,DCDC}, T_{max,DCAC}) est augmentée d'une des valeurs de température déterminées (T_{DCDC}, T_{DCAC}) et dépasse une valeur limite (U_{PV,max})) pour la tension d'entrée (U_{PV}) de l'onduleur (12) et/ou une valeur limite (U_{ZWK,max}) pour la tension du circuit intermédiaire (U_{ZWK}).

8. Procédé selon l'une des revendications précédentes, **caractérisé en ce que** la tension d'entrée (U_{PV}) est augmentée à une tension à vide (U0) du générateur (11) lorsqu'un dépassement de la valeur limite (T_{max,DCDC}) pour la première valeur de température (T_{DCDC}) dans le convertisseur DC/DC (14) est détecté, tandis que la tension d'entrée (U_{PV}) est réduite en raison d'un dépassement de la valeur limite (T_{max,DCAC}) pour la deuxième valeur de température (T_{DCAC}) dans le pont onduleur (16) et est inférieure à une tension du circuit intermédiaire minimale nécessaire (U_{ZWK,min}).

9. Procédé selon la revendication 8, **caractérisé en ce que** la tension d'entrée (U_{PV}) est réduite à zéro, en particulier en court-circuitant le générateur (11) au moyen du convertisseur DC/DC (14), lorsque la tension à vide (U0) du générateur (11) est supérieure à la valeur limite (U_{PV,max}) pour la tension d'entrée (U_{PV}) de l'onduleur (12) et/ou à la valeur limite (U_{ZWK,max}) pour la tension du circuit intermédiaire (U_{ZWK}).

10. Procédé selon l'une des revendications précédentes, **caractérisé en ce que** les valeurs de température (T_{DCDC}, T_{DCAC}) dans le convertisseur DC/DC (14) et/ou dans le pont onduleur (16) sont déterminées sur la base de modèles de température, les modèles de température traitant des valeurs de mesure de capteurs de température (19) qui sont associés au convertisseur DC/DC (14) et/ou au pont onduleur (16), et les valeurs de température (T_{DCDC}, T_{DCAC}) représentant des températures sur ou dans des commutateurs à semi-conducteurs du convertisseur DC/DC (14) et/ou du pont onduleur (16).

11. Onduleur (12) pour un système de production énergétique (10), l'onduleur (12) comportant un convertisseur DC/DC (14) du côté de l'entrée, qui est conçu comme un convertisseur élévateur, un pont onduleur (16) du côté de la sortie, un dispositif de commande (17) pour commander le convertisseur DC/DC (14) et le pont onduleur (16) avec des signaux de commande (18), et des capteurs de température (19) respectivement affectés au convertisseur DC/DC (14) et au pont onduleur (16), **caractérisé en ce que** le dispositif de commande (17) est configuré pour exécuter un procédé selon l'une des revendications 1 à 10.

12. Onduleur (12) selon la revendication 11, **caractérisé en ce qu'**un générateur (11), en particulier un générateur photovoltaïque, peut être connecté à l'onduleur (12) du côté de l'entrée.

13. Onduleur selon l'une des revendications 11 à 12, **caractérisé en ce que** le convertisseur DC/DC (14) comprend au moins un commutateur à semi-conducteur et le pont onduleur (16) comprend au moins deux commutateurs à semi-conducteur.

14. Onduleur (12) selon l'une des revendications 11 à 13, **caractérisé en ce que** le pont onduleur (16) comprend une inductance de filtrage disposée du côté de la sortie.
